# EUROPÄISCHE PATENTSCHRIFT

(11) **EP 1 995 550 B1**
(45) Veröffentlichungstag und Bekanntmachung des Hinweises auf die Patenterteilung: **28.08.2013**
(21) Anmeldenummer: 08008702.6
(22) Anmeldetag: 09.05.2008
(51) Int. Cl.: F41H 7/04, F41H 7/02, B60D 1/04, B60D 1/54, B60D 1/48, B60D 1/14

(54) **Bergevorrichtung mit einer Abschleppkupplung**
Recovery device with a tow coupling
Dispositif de dépannage doté d'un accouplement de remorquage

(30) Priorität: 25.05.2007 DE 102007024707
(43) Veröffentlichungstag der Anmeldung: 26.11.2008
(73) Patentinhaber: Rheinmetall Landsysteme GmbH, 24107 Kiel (DE)
(72) Erfinder: Fleige, Christian, 48653 Coesfeld (DE); Tiessen, Dierk, 24211 Preetz (DE); Röstel, Burkhard, 24232 Schönkirchen (DE); Möller, Helge, 24214 Bornstein (DE); Jans, Joachim, 24229 Schwedeneck (DE)
(74) Vertreter: Dietrich, Barbara

(56) Entgegenhaltungen:
- EP-A1- 0 767 079
- DE-U1- 20 122 378
- US-A- 6 092 827

## Beschreibung

Die Erfindung betrifft eine Bergevorrichtung mit einer Abschleppkupplung zur Anordnung der Abschleppkupplung an der Heckklappe eines gepanzerten Fahrzeuges, wobei die Heckklappe um eine im unteren Fahrzeugbereich befindliche waagerechte Drehachse schwenkbar angeordnet ist.

Bei gepanzerten Fahrzeugen ist zum Abschleppen eines anderen Fahrzeuges oder durch ein anderes Fahrzeug in der Regel heckseitig eine Abschleppkupplung vorgesehen, die mit der Fahrzeugkarosserie (Fahrzeugwanne) fest verbunden ist, so dass die Kräfte beim Abschleppvorgang in die Fahrzeugstruktur eingeleitet werden.

Sofern das Fahrzeug eine Heckklappe besitzt (Schützenpanzern, MTWs etc.), ergeben sich allerdings Probleme mit der Anordnung der Abschleppkupplung. Denn eine direkte Verbindung der Kupplung an dem Wannengehäuse des gepanzerten Fahrzeuges führt zu einer wesentlichen Einschränkung der Heckklappengröße, da eine mittige Befestigung der Abschleppkupplung in der Regel unterhalb der Heckklappe erfolgen muss. Eine Befestigung der Abschleppkupplung an der Heckklappe selbst würde hingegen aufgrund der beim Abschleppvorgang auftretenden hohen Kräfte (z.B. 600 kN beim Abschleppen durch einen Bergepanzer) zur Beschädigung der Heckklappe führen.

Der Erfindung liegt daher die Aufgabe zugrunde, eine Bergevorrichtung der eingangs erwähnten Art anzugeben, mittels der heckseitig an einem gepanzerten Fahrzeug mit Heckklappe eine Abschleppkupplung ohne Einschränkung der Größe der Heckklappenöffnung anordbar ist, wobei die beim Abschleppvorgang auftretenden Kräfte in die Fahrzeugstruktur übertragen werden. Außerdem soll die Bergevorrichtung auf einfache Weise montierbar sowie auch wieder demontierbar sein, um das Verladegewicht des entsprechenden gepanzerten Fahrzeuges gegebenenfalls reduzieren zu können.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, dass die Bergevorrichtung ein separat zu adaptierendes Grundgestell umfasst, an dem die Abschleppkupplung kraftschlüssig befestigt ist, und welches mit Hilfe eines U-förmig ausgebildeten unteren Trägers an dem bodenseitigen Bereich der Karosserie des Panzers entlang der Drehachse der Heckklappe befestigbar ist. Ein weiterer, ebenfalls U-förmig ausgebildeter oberer Träger des Grundgestells ist durch die Heckklappe hindurch mit der Karosserie -und zwar an dem Rahmen der Heckklappenöffnung- verbindbar, so dass die Kräfte beim Abschleppvorgang über das Grundgestell in die Fahrzeugstruktur eingeleitet werden können.

Die erfindungsgemäße Bergevorrichtung weist nicht nur die Vorteile auf, dass sie zu keiner Einschränkung der Heckklappenöffnung führt und im Bedarfsfall auf einfache Weise an- und abgebaut werden kann, sondern die erforderlichen Modifikationen zur Montage der erfindungsgemäßen Bergevorrichtung bei bereits vorhandenen gepanzerten Fahrzeugen mit Heckklappen sind auch auf ein Minimum reduziert. Veränderungen bereits bestehender Baugruppen, wie der zentralen hydraulischen Anlage, sind in der Regel nicht erforderlich und das Zusatzgewicht im Bereich des Fahrgestelles ist minimal. Außerdem ergeben sich keinerlei nachteilige Auswirkungen in Bezug auf den Schutz der Besatzung (Minenschutz) und die weitere Nutzung der teilweise geöffneten Heckklappe als Kampfstand ist ebenfalls gewährleistet.

Durch eine elastisch gelagerte Durchführung des Grundgestells durch die Heckklappe ist ein optimaler Toleranzausgleich gegeben.

Bei einer ersten Ausführungsform der Erfindung sind die Enden der beiden Schenkel des oberen Trägers derart ausgebildet, dass sie zur Durchführung eines Abschleppvorganges mittels einer Schraubverbindung mit den Seitenwänden der Karosserie des Fahrzeuges verbindbar sind.

Bei einer weiteren Ausführungsform der Erfindung sind die Endbereiche der beiden Schenkel des oberen Trägers bolzenförmig ausgebildet und ragen im montierten Zustand der Bergevorrichtung jeweils durch eine Öffnung der Seitenwand der Karosserie hindurch, um zur Durchführung eines Abschleppvorganges hinter dieser mittels geeigneter Verriegelungselemente an der Karosserie des Fahrzeuges fixiert zu werden.

Weitere Einzelheiten und Vorteile der Erfindung ergeben sich aus den folgenden, anhand von Figuren erläuterten Ausführungsbeispielen. Es zeigen:
- Fig. 1 und 2: zwei perspektivische Ansichten eines ersten Ausführungsbeispieles einer erfindungsgemäßen Bergevorrichtung aus unterschiedlichen Blickrichtungen;
- Fig. 3: eine schematische Schnittdarstellung des heckseitigen Bereiches eines Fahrzeuges mit geschlossener Heckklappe und erfindungsgemäßer Bergevorrichtung, wobei für einen vorgesehenen Abschleppvorgang ein oberer Träger der Bergevorrichtung mittels einer Schraubverbindung an der Fahrzeugkarosserie befestigt ist;
- Fig. 4: eine Detailansicht eines zweiten Ausführungsbeispieles der Erfindung, wobei der obere Träger der erfindungsgemäßen Bergevorrichtung mittels eines aufschiebbaren Verriegelungselementes an der Fahrzeugkarosserie befestigt ist, und
- Fig. 5: eine perspektivische Ansicht des Verriegelungselementes.

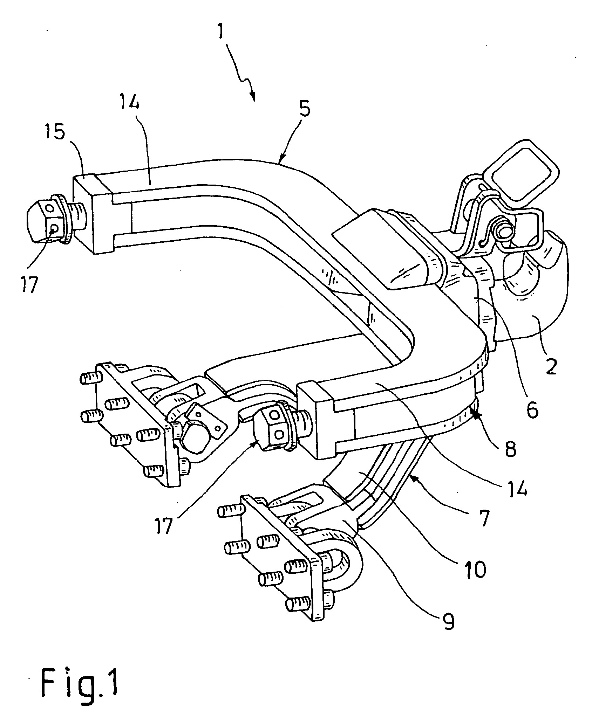

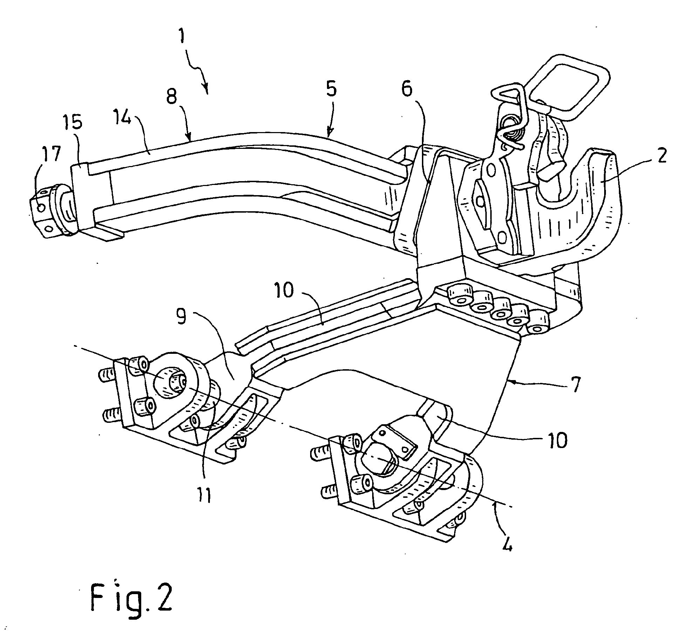

In den Fig. 1 bis 3 ist mit 1 eine erfindungsgemäße Bergevorrichtung mit einer Abschleppkupplung 2 bezeichnet, mittels welcher die Abschleppkupplung 2 mittig an der Heckklappe 3 eines nicht im Einzelnen dargestellten gepanzerten Fahrzeuges (z.B. ein Schützenpanzer) anordbar ist. Die Heckklappe 3 ist dabei um eine im unteren Fahrzeugbereich befindliche fahrzeugfeste horizontale Drehachse 4 von einer geschlossenen in eine geöffnete Position (und umgekehrt) schwenkbar angeordnet.

Die erfindungsgemäße Bergevorrichtung 1 umfasst ein Grundgestell 5 mit einer Dichtfläche 6, an dem die Abschleppkupplung 2 angeschraubt ist. Außerdem sind an der Dichtfläche 6 ein im Wesentlichen U-förmig ausgebildeter unterer Träger 7 und ein ebenfalls U-förmig ausgebildeter oberer Träger 8 angeschraubt.

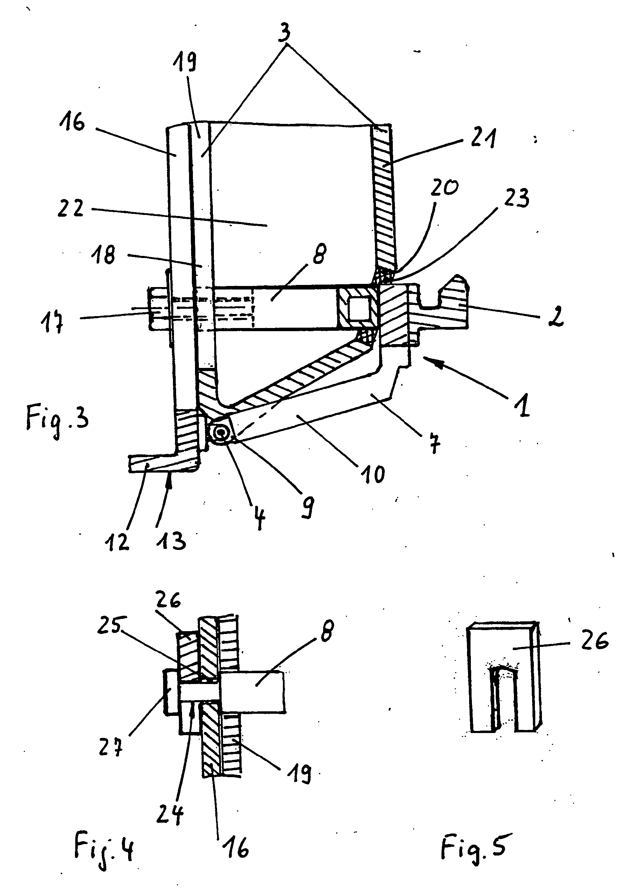

Die der Dichtfläche 6 abgewandten Enden 9 der beiden Schenkel 10 des unteren Trägers 7 sind im Scharnierbereich der Heckklappe 3 über Anlenkpunkte 11 mit der Fahrzeugkarosserie (Fahrzeugwanne) 13 verbindbar, derart, dass der untere Träger 7 im montierten Zustand (Fig.3) um die Drehachse 4 der Heckklappe 3 schwenkbar ist.

Die beiden Schenkel 14 des bügelförmig ausgebildeten oberen Trägers 8 liegen seitlich in der Heckklappe 3 des Fahrzeuges und weisen einen Abstand voneinander auf, der derart gewählt ist, dass ihre der Dichtfläche 6 abgewandten Enden 15 von der Innenseite des Fahrzeuges mit der Seiten- bzw. Heckwand 16 der Fahrzeugkarosserie 13 (in der Regel handelt es sich um den die heckseitige Öffnung der Fahrzeugkarosserie umgebenden Rahmen) mittels Schrauben 17 verbindbar sind, sofern ein Abschleppvorgang vorgenommen werden soll, so dass die Kräfte beim Abschleppvorgang über das Grundgestell 5 in die Fahrzeugkarosserie eingeleitet werden.

Sofern kein Abschleppvorgang beabsichtigt ist, werden die Schrauben 17 entfernt, so dass die oberen Träger 8 des Grundgestells 5 nicht mehr mit der Seiten- bzw. Heckwand 16 der Karosserie 13 des Fahrzeuges verbunden sind und die Heckklappe 3 verschwenkt werden kann.

Zur Montage der erfindungsgemäßen Bergevorrichtung 1 wird der obere Träger 8 von innen durch eine Öffnung 18 der Innenwand 19 und einen Durchbruch 20 in der Außenwand 21 der Heckklappe 3 geführt und außerhalb mit dem unteren Träger 7 verschraubt, welcher bereits mit dem unteren Träger 7 verbunden ist. An diese Konstruktion wird dann die Abschleppkupplung 2 angeschraubt. Dabei verbleibt der bügelförmige obere Träger 8 in dem Zwischenraum 22 zwischen Innen- und Außenwand 19 und 21 der Heckklappe 3.

Der Durchbruch 20 in der Außenwand 21 der Heckklappe 3 wird mit einer stark elastischen Dichtung 23 verschlossen, so dass durch die elastische Lagerung des Grundgestells 5 in dem Durchbruch 20 ein optimaler Toleranzausgleich gewährleistet ist (bei einem praktischen Ausführungsbeispiel wurde die Dichtung derart gewählt, dass sie bei maximaler Belastung eine seitliche Verschiebung der Bergevorrichtung von ca. 12 mm zulässt).

Die Erfindung ist selbstverständlich nicht auf das vorstehend beschriebene Ausführungsbeispiel beschränkt. So muss für den Abschleppvorgang die Verbindung des oberen Trägers des Grundgestells mit der Fahrzeugkarosserie nicht zwingend über Schrauben erfolgen, sondern es können auch andere Verbindungselemente vorgesehen sein.

Ein weiteres Ausführungsbeispiel einer derartigen Verbindung zeigen die Figuren 4 und 5. Dabei sind die Endbereiche 24 der beiden Schenkel 14 des oberen Trägers 8 bolzenförmig ausgebildet und ragen in der geschlossenen Position der Heckklappe 3 durch entsprechende Ausnehmungen 25 der Seitenwände 16, so dass eine Verbindung zwischen den Seitenwänden 16 und den oberen Trägern 8 durch aufschiebbare Verriegelungselemente 26 erfolgen kann. Diese Verriegelungselemente 26 liegen dann einerseits an der entsprechenden Seitenwand 16 der Fahrzeugkarosserie 13 und andererseits an dem Bolzenkopf 27 an.

### Bezugszeichenliste

- 1: Bergevorrichtung
- 2: Abschleppkupplung
- 3: Heckklappe
- 4: Drehachse
- 5: Grundgestell
- 6: Dichtfläche
- 7: unterer Träger
- 8: oberer Träger
- 9: Ende
- 10: Schenkel
- 11: Anlenkpunkt

- 13: Karosserie, Fahrzeugkarosserie
- 14: Schenkel
- 15: Ende
- 16: Seitenwand/Heckwand
- 17: Schraube
- 18: Öffnung
- 19: Innenwand-Heckklappe
- 20: Durchbruch
- 21: Außenwand-Heckklappe
- 22: Zwischenraum
- 23: Dichtung
- 24: Endbereich
- 25: Ausnehmung
- 26: Verriegelungselement
- 27: Bolzenkopf

## Patentansprüche

1. Bergevorrichtung mit einer Abschleppkupplung (2) zur Anordnung der Abschleppkupplung (2) an der Heckklappe (3) eines gepanzerten Fahrzeuges, wobei die Heckklappe (3) um eine im unteren Fahrzeugbereich befindliche waagerechte Drehachse (4) schwenkbar angeordnet ist, **dadurch gekennzeichnet, dass**:
a) die Bergevorrichtung (1) ein Grundgestell (5) mit einer Dichtungsfläche (6) umfasst, an der die Abschleppkupplung (2) sowie ein unterer, im wesentlichen U-förmig ausgebildeter Träger (7) und ein oberer, ebenfalls im wesentlichen U-förmig ausgebildeter Träger (8) kraftschlüssig befestigt ist;
b) die der Dichtungsfläche (6) abgewandten Enden (9) der beiden Schenkel (10) des unteren Trägers (7) mit im Scharnierbereich der Heckklappe (3) über Anlenkpunkte (11) mit der Fahrzeugkarosserie (13) verbindbar sind, derart, dass der untere Träger (7) im montierten Zustand um die Drehachse (4) der Heckklappe (3) schwenkbar ist;
c) die beiden Schenkel (14) des oberen Trägers (8) seitlich durch die Heckklappe (3) des Fahrzeuges hindurchführbar sind und einen Abstand voneinander aufweisen, der derart gewählt ist, dass ihre der Dichtungsfläche (6) abgewandten Enden (15) von der Innenseite des Fahrzeuges mit einer Seiten- bzw. Heckwand (16) der Karosserie (13) des Fahrzeuges lösbar verbindbar sind.

2. Bergevorrichtung nach Anspruch 1, **dadurch gekennzeichnet, dass** die Enden (15) der beiden Schenkel (14) des oberen Trägers (8) derart ausgebildet sind, dass sie mittels einer Schraubverbindung mit der Heckwand (16) der Karosserie (13) des Fahrzeuges verbindbar sind.

3. Bergevorrichtung nach Anspruch 1, **dadurch gekennzeichnet, dass** die Endbereiche (24) der beiden Schenkel (14) des oberen Trägers (8) bolzenförmig ausgebildet sind und im montierten Zustand der Bergevorrichtung (1) jeweils durch eine Ausnehmung (25) der Seitenwand (16) der Karosserie (13) hindurchragen und hinter dieser mittels eines aufschiebbaren Verriegelungselementes (26) an der Karosserie (13) des Fahrzeuges fixiert werden.

4. Bergevorrichtung nach einem der Ansprüche 1 bis 3, **dadurch gekennzeichnet, dass** der untere und der obere Träger (7, 8) mit der Dichtungsfläche (6) über Schraubverbindungen verbunden sind.

## Claims

1. Recovery device with a tow coupling (2) for arranging the tow coupling (2) on the hatch door (3) of an armoured vehicle, wherein the hatch door (3) is arranged pivotably about a horizontal axis of rotation (4) located in the lower vehicle region, **characterized in that**:
a) the recovery device (1) comprises a basic frame (5) with a sealing surface (6) to which the tow coupling (2), and also a lower support (7) of substantially U-shaped design and an upper support (8) likewise of substantially U-shaped design are fastened in a frictional manner;
b) those ends (9) of the two limbs (10) of the lower support (7) which face away from the sealing surface (6) are connectable to the vehicle bodywork (13) via coupling points (11) in the hinge region of the hatch door (3) in such a manner that, in the fitted state, the lower support (7) is pivotable about the axis of rotation (4) of the hatch door (3),
c) the two limbs (14) of the upper support (8) are guidable laterally through the hatch door (3) of the vehicle and are at a distance from each other which is selected in such a manner that those ends (15) of the limbs which face away from the sealing surface (6) are releaseably connectable from the inside of the vehicle to a side wall or rear wall (16) of the bodywork (13) of the vehicle.

2. Recovery device according to Claim 1, **characterized in that** the ends (15) of the two limbs (14) of the upper support (8) are designed in such a manner that they are connectable to the rear wall (16) of the bodywork (13) of the vehicle by means of a screw connection.

3. Recovery device according to Claim 1, **characterized in that** the end regions (24) of the two limbs (14) of the upper support (8) are of pin-shaped design and, in the fitted state of the recovery device (1), protrude in each case through a recess (25) in the side wall (16) of the bodywork (13) and are fixed behind the latter to the bodywork (13) of the vehicle by means of a locking element (26) which can be pushed on.

4. Recovery device according to one of Claims 1 to 3, **characterized in that** the lower support and the upper support (7, 8) are connected to the sealing surface (6) via screw connections.

## Revendications

1. Dispositif de dépannage comprenant un accouplement de remorquage (2) destiné à attacher l'accouplement de remorquage (2) au hayon arrière (3) d'un véhicule blindé, le hayon arrière (3) étant disposé de manière à pouvoir pivoter autour d'un axe de rotation horizontal (4) situé dans la région inférieure du véhicule,
**caractérisé en ce que** :
a) le dispositif de dépannage (1) comprend un châssis de base (5) avec une surface d'étanchéité (6) sur laquelle est fixé, par engagement par force, l'accouplement de remorquage (2) ainsi qu'un support inférieur (7), essentiellement en forme de U, et un support supérieur (8), également essentiellement en forme de U ;
b) les extrémités (9) des deux branches (10) du support inférieur (7) opposées à la surface d'étanchéité (6) peuvent être connectées à la carrosserie du véhicule (13) dans la région de charnière du hayon arrière (3) par le biais de points d'articulation (11), de telle sorte que le support inférieur (7), dans l'état monté, puisse pivoter autour de l'axe de rotation (4) du hayon arrière (3) ;
c) les deux branches (14) du support supérieur (8) peuvent être guidées latéralement à travers le hayon arrière (3) du véhicule et présentent un espacement l'une de l'autre qui est choisi de telle sorte que leurs extrémités (15) opposées à la surface d'étanchéité (6) puissent être connectées de manière amovible depuis le côté intérieur du véhicule à une paroi latérale ou arrière (16) de la carrosserie (13) du véhicule.

2. Dispositif de dépannage selon la revendication 1, **caractérisé en ce que** les extrémités (15) des deux branches (14) du support supérieur (8) sont réalisées de telle sorte qu'elles puissent être connectées au moyen d'une connexion vissée à la paroi arrière (16) de la carrosserie (13) du véhicule.

3. Dispositif de dépannage selon la revendication 1, **caractérisé en ce que** les régions d'extrémité (24) des deux branches (14) du support supérieur (8) sont réalisées sous forme de boulons et, dans l'état monté du dispositif de dépannage (1), traversent à chaque fois un évidement (25) de la paroi latérale (16) de la carrosserie (13) et sont fixées derrière celle-ci sur la carrosserie (13) du véhicule au moyen d'un élément de verrouillage (26) pouvant être enfilé sur celles-ci.

4. Dispositif de dépannage selon l'une quelconque des revendications 1 à 3, **caractérisé en ce que** le support inférieur et le support supérieur (7, 8) sont connectés à la surface d'étanchéité (6) par le biais de raccords à vis.
